# EUROPEAN PATENT APPLICATION

(11) **EP 1 419 961 A1**
(43) Date of publication of application: **19.05.2004**
(21) Application number: 02447224.3
(22) Date of filing: 15.11.2002
(51) Int. Cl.: B62M 3/00

(54) **Hollow crank arm for bicycle**

(71) Applicant: IPA N.V.-Composites, 9160 Lokeren (BE); COLNAGO ERNESTO & C. S.r.l., 20040 Cambiago (Milano) (IT)
(72) Inventor: van Raemdonck, Joris, 9160 Lokeren (BE); Colnago, Ernesto, 20040 Cambiago (IT)
(74) Representative: Brants, Johan Philippe Emile

(57) **Abstract**

A composite bicycle right crank comprising: a crank body having a hub portion (10), a hollow crank portion (11) and at least 3 fastening fingers (12), said body being formed of a composite material retaining at least 5 metal arrangements, i.e. a bore (10) positioned on the hub portion of said body, a pedal mounting arrangement (14) positioned at the end of the hollow crank portion (11), and sprocket mounting arrangements (19) positioned at the end of the fastening fingers and a method for the manufacture of said bicycle crank comprising the step of:
positiomimg a bore (13), at least 3 sprocket mounting arrangement (19) and a pedal mounting arrangement (14) in fixed positions in a female mold; and
applying composite material (55) within the mold and around the arrangements (13,14,19) and, providing at least one inflatable bladder in the mold, wherein said bladder is connected to at least one passage (44) protruding at least one of the arragements (13,14) and/or the crank portion (11) and/or the hub portion (10),
mating the top half of the female mold on the bottom half of the female mold;
curing the composite material (55), while
   inflating said bladder so as to cause the composite material (55) to generally conform to the shape of the mold.

## Description

### FIELD OF THE INVENTION

The present invention relates to improved hollow bicycle cranks for bicycle pedals made of composite material more specifically of fiber reinforced polymer composites, and to methods for manufacturing the same.

### BACKGROUND OF THE INVENTION

The fabrication of bicycle crank utilizing fiber reinforced polymer composites is well known. For example, the use of thermoset composites to fabricate unitary construction bicycle cranks is disclosed in US Pat. No. 6,202,506 and US Pat. No. 6,305,243. US Pat. No. 6,202,506 discloses a bicycle crank with a core comprised of a durofoam substance, a fiber-reinforced plastic coating encasing the core and two bottom bracket axle fitting arrangements foamed into the core accessible through the fiber-reinforced plastic coating. US Pat. No. 6,305,243 discloses a crank including a main body, an axle fastening member fastened with one end of the main body, a pedal fastening member fastened with other end of the main body, and a cover body of a carbon fiber material for embedding the main body, the axle fastening member and the pedal fastening member.

Bicycle crank arm designed for mounting a sprocket thereto are also known. US Pat. No. 5,893,299 discloses a bicycle crank arm, which has a centrally located hub portion, a crank portion extending radially outwardly from the hub portion and fastening fingers extending radially outwardly from the hub portion constructed of a metallic material.

Thus, although the prior art has recognized, to a limited extent, the benefits of providing a lightweight and durable bicycle cranks, the proposed solutions have, to date, been ineffective in providing a satisfactory remedy.

In view of the foregoing, it is a main object of the invention to provide hollow bicycle cranks made of composite material. Still another object of the present invention is to provide a bicycle crank arm which is light weight and strong. Another object of the present invention is to provide a sprocket supporting crank arm which is relatively easy and inexpensive to manufacture. Another object of the present invention is to provide a bicycle crank arm having fastening fingers with substantially the same rigidity and the same alignment at their ends for supporting and coupling one or more sprockets thereto. It is another object of the present invention to provide a method for fabricating said composite hollow bicycle cranks which are lightweight and durable, wherein the method minimizes the manual operations involved in the practice thereof, and consequently facilitates the manufacture of bicycle cranks at a substantially reduced cost. As such, it is desirable to minimize or eliminate the steps required for providing interconnection of the crank members and for providing a desirable finish, so as to substantially reduce the amount of labor involved in the fabrication process.

### SUMMARY OF THE INVENTION

The present invention specifically addresses and alleviates the above-mentioned deficiencies associated with the prior art. In a first aspect, the present invention provides a composite bicycle left crank arm with a hollow crank body which is described in the non-public patent application No. 02447126.0 filed on July 05, 2002, the content of which is incorporated herein. In a second aspect, the present invention provides a composite bicycle right crank arm with a crank body having a hub portion adapted to be coupled to a crank spindle of a bicycle, a hollow crank portion having an inner end coupled to the hub portion and an outer end adapted to be coupled to a bicycle pedal and at least 3 fastening fingers extending radially outwardly from the hub portion to an end for mounting a bicycle sprocket thereto.

The left crank arm according to the invention, is a lightweight and durable composite bicycle crank comprising a hollow crank body (1) having a first and second end, formed of a composite material (5) retaining two metal arrangements, i.e. a bottom bracket axle fitting arrangement (2) positioned at the first end of said body and a pedal mounting arrangement (3) positioned at the second end of said body. In a preferred embodiment at least one passage (4) for a pressurized fluid or gas is provided protruding the hollow crank body (1). In another embodiment, at least one passage (4) for a pressurized fluid or gas is provided protruding at least one of the arrangements (2,3).

The right crank arm (9) according to the invention is a lightweight and durable composite bicycle crank comprising a crank body having a hub portion (10), a hollow crank portion (11) and at least 3 fastening fingers (12), said body being formed of a composite material (55) retaining at least 5 metal arrangements, i.e. a bore (13) positioned on the hub portion (10) of said body, a pedal mounting arrangement (14) positioned at the end of said hollow crank portion (11), and sprocket mounting arrangements (19) positioned at the end (16) of the fastening fingers (12).

In an embodiment of the present invention, at least 30% to 90 % of the right crank body is hollow, preferably 30 % to 75 %, more preferably 30 % to 60 %.

In an embodiment of the present invention, the hub portion (10) and/or the fastening fingers (12) are provided with at least one cavity (23). Preferably, the hub portion (10), crank portion (11), fastening fingers (12) and the metal arrangements are all integrally formed as a one-piece, unitary member utilizing bladder molding manufacturing techniques.

In another embodiment, at least one passage (44) for a pressurized fluid or gas is provided protruding the hollow hub portion (10) and/or the hollow crank portion (11), and/or the fastening fingers. In another embodiment, at least one passage (44) for a pressurized fluid or gas is provided protruding at least one of the arrangements (13,14).

Preferably, the arrangements (13, 14, 19) are constructed of a light weight metallic material such as titanium, an aluminum alloy or stainless steel.

The hollow crank body (1) of the left crank, or the hollow hub portion (10) and/or the hollow crank portion (11) and/or the hollow fastening fingers (12) of the right crank (9), may be partitioned in any desired manner, thereby providing improved resistance to the cranks when subjected to mechanical stresses especially torsion stresses. It may have two or more compartments, arranged in any desired manner within the crank body.

The composite material (5,55) can be made from glass, carbon, ceramics, aromatic, ultra high molecular weight polymeric or metallic fibers. The composite material is preferably a matrix material which is typically a thermosetting or thermoplastic polymer such as epoxy, polyester, polypropylene, polyurethane, polyamides, polyvinylester, etc likely to comprise strands of fiber glass, carbon, ceramics, aromatic fibers, ultra high molecular weight polymeric fibers or metallic fibers. In an embodiment of the present invention, said composite material (5,55) is a carbon based or a metal based matrix material.

In another embodiment of the present invention, said composite material (5,55) is a polymer impregnated fiber material. The polymer may comprise either a thermoset polymer or a thermoplastic polymer, as desired. The crank is preferably comprised of composite material (5,55) made of a thermoplastic impregnated fiber material, or a polymer impregnated carbon fiber material. The primary choices are carbon or carbon composite materials. Aramids (aromatic nylons) may be used in combination with carbon. Aramide filaments are prepared by condensation of a diamine and terephthalic acid, a carboxylic acid that contains a hexagonal benzene ring in its molecules. The close packing of the aromatic polymer chains produced a strong, tough, stiff, high-melting fiber for radial tires, heat- or flame-resistant fabrics, bulletproof clothing, and fiber-reinforced composite materials. Examples are Nomex @ and Kevlar ® (both owned by Dupont).

The cranks according to the invention, preferably comprises fiber reinforced polymer composite comprising a continuous wrapped sheet of fiber material. The fiber material preferably comprises at least one ply of interwoven fiber material impregnated with a curable resin.

In another embodiment of the present invention, said left bicycle crank comprises a hollow crank body wherein the external circumference of the arrangements (2,3) is provided with syntactic foam for increasing the adherence with the composite. In another embodiment of the present invention, said right bicycle crank comprises a crank body wherein the external circumference of the arrangements (13,14,19) is provided with syntactic foam for increasing the adherence with the composite.

Syntactic foams suitable for use herein are usually produced by dispersing microscopic rigid, hollow or solid particles in a liquid or semi-liquid thermosetting resin and then hardening the system by curing. The particles are generally spheres or microballoons of carbon, polystyrene, concrete, phenolic resin, urea-formaldehyde resin, glass, or silica, ranging from 20 to 200 micrometers in diameter. The liquid resins used are the usual resins used in molding reinforced articles, e.g., epoxy resin, polyesters, and urea-formaldehyde resins.

The main advantage of the bicycle cranks according to the invention is their strength and ability to compensate the compressive and tensile stresses during use of said bicycle.

Furthermore, the cranks according to the invention has the advantage of having metal arrangements encased in a composite body thereby forming single device without the need of additional connecting or joining tools. In addition, the metal mounting arrangements encased in the composite body of the right crank provide fastening fingers with substantially the same rigidity and the same alignment at their ends for supporting and coupling one or more sprockets thereto.

The present invention relates further to a method for the manufacture of a bicycle left crank according to the invention, comprising the steps of:
a) positioning a bottom bracket axle fitting arrangement (2) and a pedal mounting arrangement (3) in fixed positions in a female mold; and
b) applying composite material (5) within the mold and around the arrangements (2) and (3),
c) providing at least one inflatable bladder (8) in the mold, wherein said bladder is connected to at least one passage (4) protruding at least one of the arrangements (2) or (3) and/or the composite material (5),
d) mating the top half of the female mold (7b) on the bottom half of the female mold;
e) curing the composite material (5) ; while
f) inflating said bladder (8) so as to cause the composite material (5) to generally conform to the shape of the mold.

The same method may be applied to the manufacture of a right crank according to the invention, by using a female mold with a suitable shape to produce the right crank as described herein. More particularly, the present invention relates to a method for the manufacture of a right crank according to the invention, comprising the steps of:
a) positioning bore (13), at least 3 sprocket mounting arrangement (19) and a pedal mounting arrangement (14) in fixed positions in a female mold; and
b) applying composite material (55) within the mold and around the arrangements (13) (14) and (19),
c) providing at least one inflatable bladder in the mold, wherein said bladder is connected to at least one passage (44) protruding at least one of the arrangements (13) or (14) and/or the crank portion (11) and/or the hub portion (10),
d) mating the top half of the female mold on the bottom half of the female mold;
e) curing the composite material (55) ; while
f) inflating said bladder so as to cause the composite material (55) to generally conform to the shape of the mold.

According to an embodiment of the present methods, step (e) comprises heating the bottom half and the top half of the female mold. In another embodiment step (b) may be performed after step (c). The present method further comprises the step of (g) cooling the top half and the bottom half of the female mold subsequent to inflating said bladder.

The main step in the invention is that the cranks are bladder molded through a passage protruding at least one of the metal arrangements and/ or the composite material.

The female mold is preferably covered with a composite material which is a polymer-impregnated fiber by applying sheet or tape of woven fiber which has been impregnated with polymer. Preferably, at least one singular, continuous section of such impregnated fiber is utilized, so as to enhance the strength of the crank. Further, according to the preferred embodiment of the present invention, a layer of nylon, preferably comprising nylon sheet or tape is wrapped over the polymer impregnated fiber so as to further enhance the surface finish of the crank. The use of such a nylon outer layer provides a smooth and glossy surface finish which is substantially transparent and thus allows the woven fiber material disposed therebelow in the crank to be seen, thus enhancing the aesthetic appeal thereof.

In a preferred embodiment, After the arrangement have been positioned into the bottom half of the female mold, syntactic foam is applied on the outer surface of said arrangements thereby enhancing the adherence to the composite material. The composite material is then added to the female mold.

The bladder can then be placed into the bottom half of the female, connected to a passage protruding at least one of the arrangements or through the body of the hollow cranks (1,9). The top half of the mold is subsequently mated to bottom half of said mold. Heat is applied thereto, and the bladder is pressurized, causing the composite material to conform to the shape of the cavity so as to define a unitary construction crank. During this conforming process, the composite forms a flush surface with the outer surfaces thereof in a manner which minimizes or eliminates the need for surface finishing of the crank after it has cooled and been removed from the mold. When more than one bladder is placed in the mold, a partitioned hollow body can be obtained.

In another embodiment the bladder is introduced when the mold is closed. The bladder will then be introduced through an opening in the mold and through the composite material. Upon curing the bladder is inserted. Once cured the bladder may remain in the hollow body or be remove therefrom.

Thus, according to the present invention, the substantial manual effort required to finish the bicycle cranks is reduced or eliminated. As such, the molding process of the present invention provides a crank which has a desired surface finish, thereby substantially reducing the cost of fabrication.

In the following detailed description, reference is made to the accompanying figures, in which is shown by way of illustration, specific embodiments in which the invention may be practiced.

### BRIEF DESCRIPTION OF THE DRAWINGS

Figure 1 represents a perspective view of a left bicycle crank according to a preferred embodiment of the present invention.
Figure 2 represents a cross sectional view of the bicycle crank of figure 1.
Figure 3 represents an exploded view illustrating the female mold and the component of a left bicycle crank according to an embodiment of the present invention during the manufacture method.
Figure 4 represents a cross sectional view of a left bicycle crank according to another preferred embodiment.
Figure 5 represents a cross sectional view of the left bicycle crank according to yet another preferred embodiment.
Figure 6 represents a partial cross sectional view of a bicycle crank assembly according to an embodiment of the present invention, illustrating a bicycle left crank and a bicycle right crank coupled to a crank spindle.
Figure 7 represents a front view of a bicycle right crank according to an embodiment of the present invention, with a sprocket fixedly coupled to the crank arm to form a crank set.
Figure 8 represents a front view of a bicycle right crank according to an embodiment of the present invention.
Figure 9 represents a longitudinal cross sectional view along the section plane I-I of the crank of Figure 8.
Figure 10 represents a longitudinal cross sectional view along a line perpendicular to the section plane I-I of Figure 8.

### DETAILED DESCRIPTION

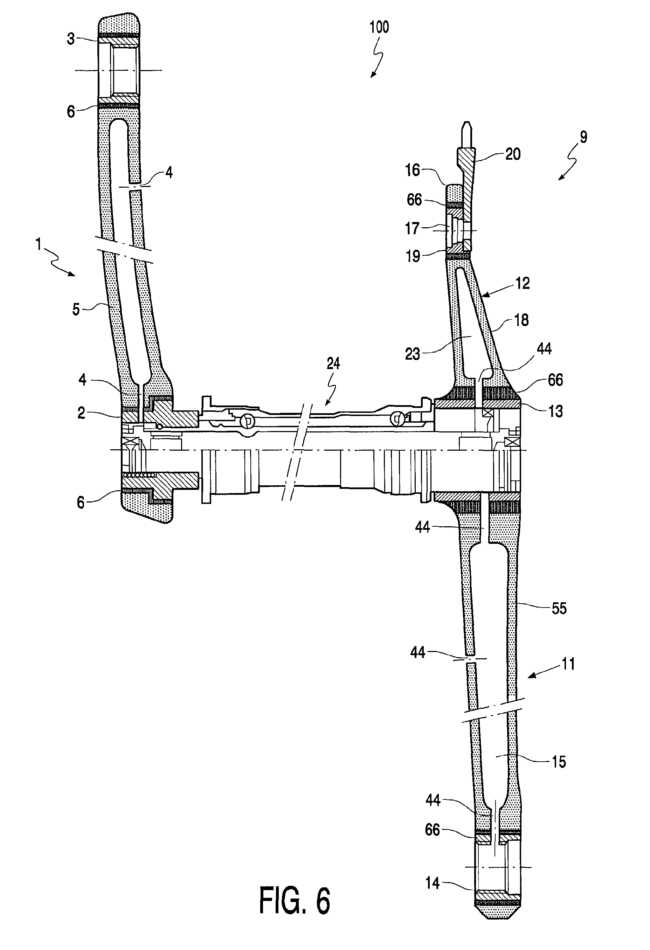

The present invention relates to hollow bicycle cranks made of composite material. Figure 6 illustrates a crank assembly (100) which includes a right crank arm (9), a left crank arm having a hollow crank body (1), a crank spindle (24), one or more sprockets (20) and a pair of pedals not shown herein. The crank spindle (24), one or more sprockets (20) and a pair of pedals are preferably conventional components which are well known in the art. Thus, these components will not be discussed in detail herein.

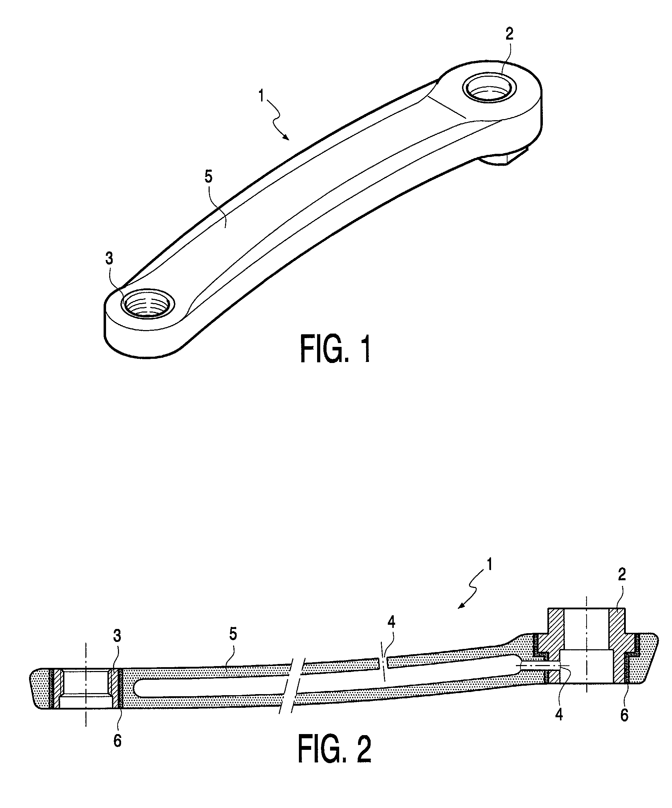

As shown figures 1 and 2, the present invention relates to a bicycle left crank, comprising a hollow body (1) having a first end and a second end, formed of a composite material (5), and further comprising a bottom bracket axle fitting arrangement (2) fastened at the first end of said body and a pedal mounting arrangement (3) fastened at the second end of said body (1).

Although not illustrated herein said left crank is formed such that its cross section is narrower on the pedal mounting section end and thicker on the crank axle section end. Changing the cross sectional area by varying the thickness of the crank in different locations is intended to enhance strength such that the stress to which the crank is subjected is more or less the same everywhere in the cross section. Preferably the cross section on the pedal mounting section end is ranging from 20 to 40 mm, preferably from 20 to 30 mm, and the cross section on the crank axle section end is ranging from 30 to 60 mm, preferably from 44 to 60 mm.

As shown Figure 2, there is at least one passage (4) which is provided between the hollow portion of the left crank body (1) and the bottom bracket axle fitting arrangement (2), and/or in the hollow crank body (1). Preferably, the bottom bracket axle fitting arrangement (2) is made of light weight metal, in particular an aluminum alloy of essentially cylindrical configuration which comprises a square receiving arrangement. Preferably, the pedal mounting arrangement (3) is also comprised of a light weight metal, in particular an aluminum alloy of essentially cylindrical configuration which comprises a female thread arrangement. In a preferred embodiment, said arrangements can be encased in an adherence improvement material or a foamable material such as syntactic foam, in order to have an enhance grip of the composite material (5) with said metal arrangements.

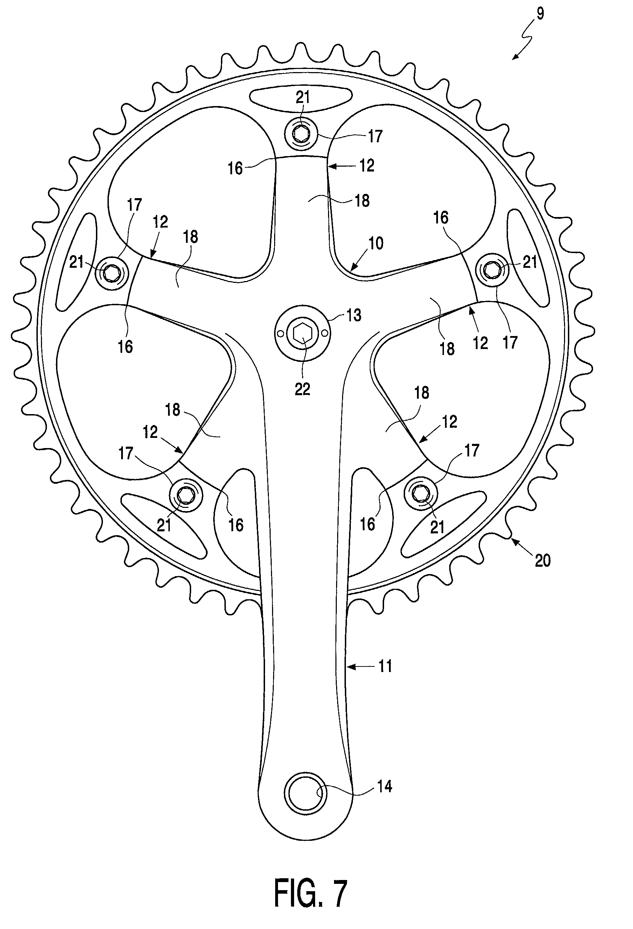

The present invention further relates to a bicycle right crank (9) as shown figures 7-10. Said right crank (9) comprises a crank body having a hollow hub portion (10), a hollow crank portion (11) and five fastening fingers (12). The hollow hub portion (10) has a center bore (13) for non-rotatably receiving crank spindle (24) therein. Preferably, the bore (13) has a non-circular cross-section which mates with the end of crank spindle (24). For example, the bore (13) can be splined to mate with splines of crank spindle. Of course, it will be apparent to those skilled in the art from this disclosure that other known shapes can be utilized. Hub portion (10) can be fixedly coupled to crank spindle (24) via a conventional crank bolt (22) in a substantially conventional manner. Accordingly, rotation of hub portion (10) causes crank spindle (24) to rotate therewith. The hollow crank portion (11) has an inner end integrally formed with hub portion (10) and an outer end with a pedal mounting arrangement (14) for attaching one of the pedals thereto. Preferably, the pedal mounting arrangement (14) can be threaded to fixedly couple the spindle of one of the pedals thereto in a conventional manner. The crank portion (11) and/or the hub portion (10) and/or the fastening fingers (12) can be provided with at least one cavity (15, 23).

The fastening fingers (12) extend radially outwardly from hub portion (10) and each have an end (16) provided with a sprocket mounting arrangement (19) which has a mounting hole (17) for securing at least one sprocket (20) thereto via for example a plurality of fasteners (21). Preferably, the fasteners (21) are conventional fasteners. For example, the fasteners (21) can be chain wheel mounting bolts with ring nuts which are commonly used to couple the sprocket to the fastening fingers (12) of the right crank arm (9). The fasteners (21) are preferably constructed of a light weight material such as an aluminum alloy or titanium. Of course, other types of fasteners and/or materials can be utilized.

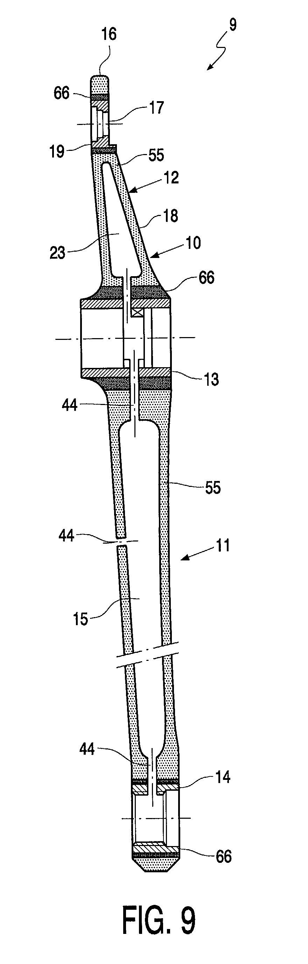

As illustrated on Figures 6 and 9, there is at least one passage (44), which is provided in the hollow crank portion (11) or between the hollow crank portion (11) and the center bore (13), and/or the pedal mounting arrangement (14), or between the center bore (13) and the hub section (10) or the fastening fingers (12).

In an embodiment of the present invention, the bore (13), the sprocket mounting arrangements (19) and the pedal mounting arrangement (14) are made of light weight metal, such as an aluminum alloy. Preferably, the pedal mounting arrangement (14) is an aluminum alloy of essentially cylindrical configuration which comprises a female thread arrangement. In a preferred embodiment, said arrangements can be encased in an adherence improvement material or a foamable material (66) such as syntactic foam, in order to have an enhance grip of the composite material (55) with said metal arrangements.

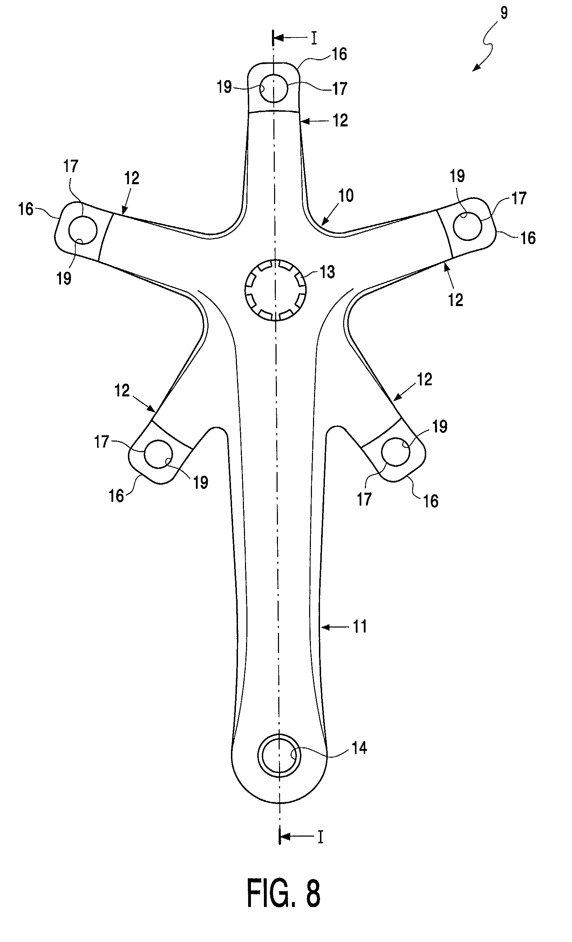

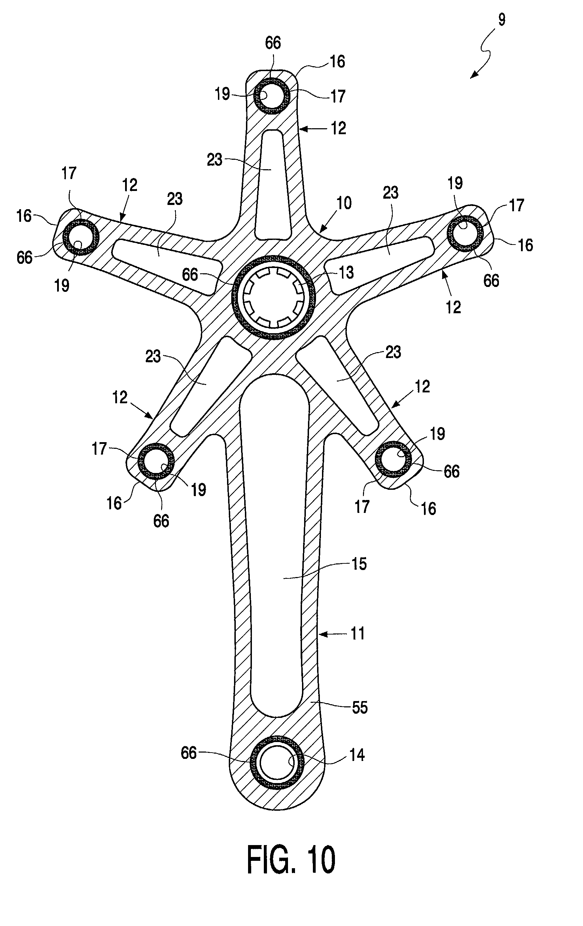

As seen in Figures 8 and 10, the fastening fingers (12) are preferably equally spaced apart about hub portion (10), i.e., fastening fingers (12) are spaced 72 DEG apart. Of course, while five fastening fingers (12) are illustrated herein, it will be apparent to those skilled in the art from this disclosure that fewer or more fastening fingers (12) could be utilized. For example, crank arm (9) could be constructed with three or four fastening fingers which could be equally spaced apart about the center of hub portion (10). As seen in figure 9, the front surfaces of fastening fingers (12) may have a contoured section (18).

According to a preferred embodiment, the right and the left cranks according to the invention can be essentially made of reinforced carbon fibers which are thermoplastic or thermoset. The specific consequences of the use of thermoplastic or thermoset and their typical advantages are known by the skilled man and will not be further illustrated in the present application.

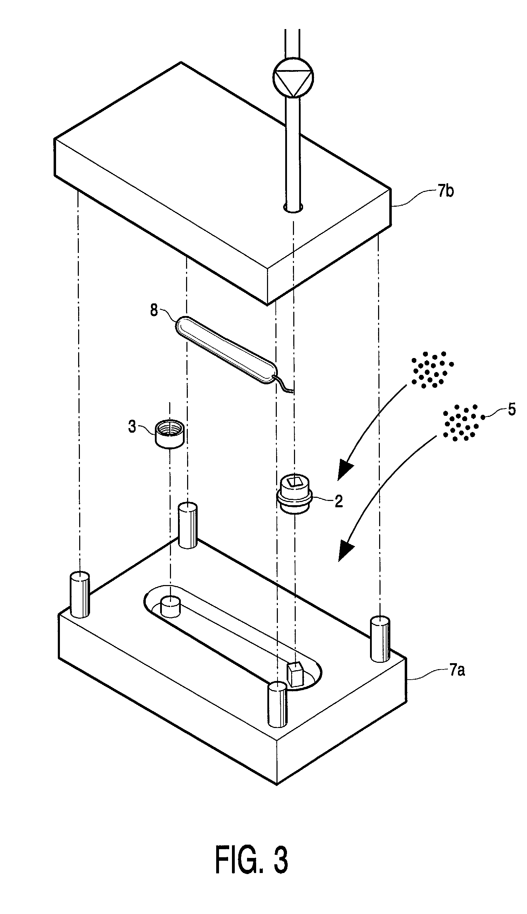

The present invention further relates to a method for manufacturing bicycle cranks according to the invention, wherein preferred molding embodiment for left crank is illustrated Figure 3. Although not illustrated herein, the same method may be applied to the manufacture of a right crank (9) according to the invention.

In a first step of said method for the manufacture of a left crank arm, a bottom bracket axle fitting arrangement (2) and a pedal mounting arrangement (3) are arranged in fixed positions in the bottom half (7a) of a female mold. Similarly, the first step for the manufacture of a hollow bicycle right arm (9) would consists of arranging a bore (13), at least 3 sprocket mounting arrangements (19) and a pedal mounting arrangement (14) in fixed positions in the bottom half of a female mold of a suitable shape.

The positioning of said arrangements is performed according to techniques known in the art. These metal arrangements may be made of any suitable metal material.

The next step in said method consists of applying a composite material (5,55) within the mold and around the arrangements (2) and (3) or for the right crank arm (9) around the arrangements (13), (19) and (14). Preferably applying a composite material (5,55) consists herein of inserting preforms of stacked resin impregnated carbon fiber plies into respective halves of the female mold.

The next step consists of positioning at least one inflatable bladder (8) over the composite material in the mold, wherein said bladder is connected to at least one passage (4,44) protruding at least one of the arrangements (2) or (3) for the left crank arm or around the arrangements (13), (19) and (14) for the right crank arm (9), or through the composite material (5,55). Then the top half of the mold (7b) is mated to the bottom half of the mold (7a) and the assembly is heated, preferably by heating the top (7b) and the bottom half (7a) of the mold, while simultaneously pressurizing the bladder (8), preferably with air pressure applied thereto. The inflated bladder thereby presses the composite material against the mold, and the material is heated to form the final cured crank.

In another embodiment, the bladder (8) is introduced once the top half (7b) of the female mold is positioned upon the bottom half of said mold (7a). The bladder is then forced through the mold and the composite to an initial central position within the hollow body to be formed.

The bladder (8) is preferably pressurized by inserting a pressurized air hose, typically via an passage (4) protruding the bottom bracket axle fitting arrangement (2) and/or the pedal mounting arrangement (3) or through the composite material. Alternatively, the bladder (8) may be heated and pressurized by causing a heated fluid, i.e., hot water, steam, hydraulic oil, low melting point metals, low melting point metal alloys such as lead alloys etc., to flow therethrough. The use of such fluid heating eliminates the need to heat the bottom half (7a) and top half (7b) of the mold. The bladder (8) is pressurized with a fluid, gas or liquid, preferably air, with a suitable pressure source located outside of the mold.

Pressurizing and heating the bladder (8) causes the bladder to expand the polymer material (5) formed thereabout such that it conforms to the shape of the mold. Thus, a hardened composite is formed during the heating process, according to well known principles.

Pressure may be applied to the bladder through the passage to compact uncured composite material while optionally applying vacuum in the mold cavity to remove entrapped air while heating mold to cure the composite material.

The timing of the pressure application, the amount of pressure, and timing and extent of the heating of the mold to curing temperature can be optimized by suitable process controllers to produce the desired results. The composite should be fully expanded by the inflatable bladder (8) to the mold walls to form for example well compacted high-fiber-content, low-void-content laminate. The pressure may be cycled, or pulsed to produce this result.

The bladder pressure can vary between 200 to 250 psig. However, higher and lower pressures may be used to fit design requirements, and the equipment design limitations. The mold is heated to the temperature required to cure the composite material being used.

In order to remove air from the mold that may cause voids in the final part, a vacuum may be applied to the mold cavity via a special port in the mold (not shown herein) before and during the time the bladder is inflated and the mold is heated. A vacuum seal can be obtained by use of an "O"-ring inside "O"-ring groove.

With particular reference to Figure 3, the inflatable bladder (8), is preferably an expandable bladder (8), formed of a temperature resistant, resilient material such as silicone, which can be optionally covered with a polymer impregnated fiber weave. Although not shown herein, more than one bladder may be added to the mold. The bladder (8) can be formed in conventional manner for the material from which it is fabricated. For heat-sealable materials conventional thermoplastic heat sealing techniques are used. For complex shapes and curves, special heat sealing elements may be used. A two-panel bag can be formed from separate sheets or a tube by sealing the edges of the bag using a heated sealing bar. The bladder (8) may be also be formed from other suitable methods, such as molding, dipping and curing around a mandrel, and the like, as long as a suitable bladder with the necessary properties can be formed.

The composite material (5,55) is preferably a woven fiber material and preferably comprises fiberglass, KEVLAR synthetic fiber, metal fibers, and/or carbon fibers. Preferably, a single, continuous sheet of polymer impregnated fiber weave is utilized so as to optimize the strength of the final bicycle crank.

Optionally a layer of transparent nylon wrapping is formed over the polymer impregnated fiber weave. The nylon wrapping melts during the molding process so as to provide a substantially clear and durable coating which adds depth to the surface finish of the crank and which allows viewing of the weave of the resulting fiber reinforced polymer composite therethrough in an aesthetically desirable manner.

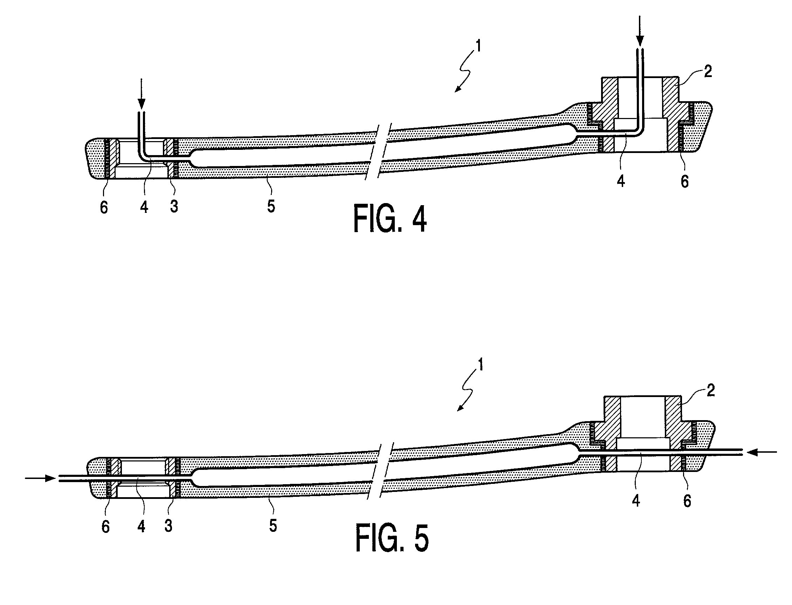

Figures 4 and 5 illustrate alternative embodiments of the present invention. Figure 4 illustrates a composite crank according to the invention wherein the passage (4) protrudes both metal arrangements (2, 3). In this case the pressurized fluid for inflating the bladder can be provided during the molding process along an L shaped tubing.

Another alternative is illustrated Figure 5, wherein the passage (4) is provided along the longitudinal axis of the crank. In this case the pressurized fluid may be provided during the molding process in a straight tubing. Although the passages (4) are illustrated in Figures 4 and 5 as protruding both metal arrangements (2, 3), it is self evident that embodiments wherein only one of the metal arrangements has a passage (4), or wherein other passages (4) are provided in the hollow crank body (1) are encompassed herein. The same alternatives applies for the manufacture of a right crank (9) according to the invention.

After the curing of the composite material, the mold may be cooled. Cooling may further be facilitated by causing a cooled fluid, i.e., air or water, to flow through the bladder (8). Conventional water cooling of the bottom half (7a) and top half (7b) of the mold may also be utilized.

After the composite material has cured, the mold is opened, the cured part crank removed, and the bladder fitting extracted from the cured part. The bladder may also be extracted or left in the cured crank. The bladder may be removed from inside the cured crank, by pulling it out of hole through which the inflation fitting extended, or any other suitable hole. When more than one bladder is used, a hollow compartmented crank is obtained.

The bladder can be made of a heat resistant plastic that does not melt or react with or bond to the interior of the molded part. Thus, it can become separated therefrom and easily removed, along with any small residue of the foam core that may be within bladder. In the preferred embodiment of this invention, the bladder consists of a thin film that comprises only a small volume of material. The film bladder can then be removed by pulling it out of even a small opening in the molded part. Additionally the thin film bladder itself can be a soluble plastic, preferably water soluble, such as polyvinyl alcohol (PVA) film. The use of easily soluble bladder films is advantageous where extremely small openings are used for inflation during molding and subsequent removal of the bladder. Soluble films are also used if molding of very complex features on the inside of the part might inhibit removal of the bladder. Such complexities might involve cocured metallic features inside the part.

After removal of the bladder and core, the completed part is trimmed if necessary and optionally provided with a coating.

It will be apparent that the composite bicycle right and left cranks produced using the method of the invention can be molded to any desired configuration, and can be used in constructing any configuration of bicycle pedal systems. With the method of the invention a bicycle right or left crank is produced that is made of composite materials, is hollow and can be mass produced, with repeatability, reliability and strength of parts, while achieving a low weight. The cured composite material making up the crank part has no overlapping joints. Furthermore a minimum amount of manual labor is required in the production of said crank.

The thus obtained composite bicycle cranks have superior characteristics due to the properties of impregnated carbon fibers, such as being very light, but at the same time very strong and having ends which are able to endure tensile and compressive forces. A crank constructed in the manner of the present invention will have many advantages even when employed in prior art wheel systems. By employing the hollow cranks of the present invention in a pedal system provides increased lateral stability, higher overall strength, reduced weight and superior performance.

The present invention further relates to a device made of composite material comprising at least one metal connection pieces, wherein said device is made of one piece using a bladder molding technique whereby at least one bladder is inflated through passage protruding at least one of the connections pieces and/or the composite material.

It is understood that the exemplary cranks described herein and shown in the drawings represents only a presently preferred embodiment of the invention. Indeed, various modifications and additions may be made to such embodiment without departing from the spirit and scope of the invention. Further, as those skilled in the art will appreciate, various different composite and/or polymer materials are likewise suitable for use in the practice of the present invention. Thus, these and other modifications and additions may be obvious to those skilled in the art and may be implemented to adapt the present invention for use in a variety of different applications.

## Claims

1. Composite bicycle right crank comprising:
a crank body having a hub portion (10), a hollow crank portion (11) and at least 3 fastening fingers (12), said body being formed of a composite material (55) retaining at least 5 metal arrangements, i.e. a bore (13) positioned on the hub portion (10) of said body, a pedal mounting arrangement (14) positioned at the end of the hollow crank portion (11), and sprocket mounting arrangements (19) positioned at the end (16) of the fastening fingers (12).

2. Bicycle crank according to claim 1, wherein at least 30% to 90 % of the crank body is hollow, preferably 30 % to 75 %, more preferably 30 % to 60 %.

3. Bicycle crank according to claim 1 or 2, wherein the hub portion (10) and/or the fastening fingers (12) are provided with at least one cavity (23).

4. Bicycle crank according to any of claim 1 to 3, wherein at least one passage (44) for a pressurized fluid or gas is provided protruding the hollow hub portion (10) and/or the hollow crank portion (11) and/or the fastening fingers (12).

5. Bicycle crank according to any of claims 1 to 4, wherein at least one passage (4) for a pressurized fluid or gas is provided protruding at least one of the arrangements (13,14).

6. Bicycle crank according to any of claims 1 to 5, wherein said composite material (55) is a carbon based or a metal based matrix material.

7. Bicycle crank according to any of claims 1 to 6, wherein said composite material (55) is a polymer impregnated fiber material.

8. Bicycle crank according to claim 7, wherein said composite material (55) is a thermoplastic impregnated fiber material.

9. Bicycle crank according to claim 7, wherein said composite material (55) a polymer impregnated carbon fiber material.

10. Bicycle crank according to any of claims 7 to 9, wherein said fiber material comprises at least one ply of interwoven fiber material impregnated with a curable resin.

11. Bicycle crank according to any of claims 1 to 10, wherein the external circumference of the arrangements (13,14,19) is provided with syntactic foam for increasing the adherence with the composite.

12. Bicycle crank according to any of claims 1 to 11, wherein said the hollow hub portion (10) and/or the hollow crank portion (11) and/or the hollow fastening fingers (12) is partitioned.

13. Method for the manufacture of a composite bicycle right crank according to any of claims 1 to 12, comprising the steps of:
a) positioning bore (13), at least 3 sprocket mounting arrangement (19) and a pedal mounting arrangement (14) in fixed positions in a female mold; and
b) applying composite material (55) within the mold and around the arrangements (13) (14) and (19),
c) providing at least one inflatable bladder in the mold, wherein said bladder is connected to at least one passage (44) protruding at least one of the arrangements (13) or (14) and/or the crank portion (11) and/or the hub portion (10),
d) mating the top half of the female mold on the bottom half of the female mold;
e) curing the composite material (55) ; while
f) inflating said bladder so as to cause the composite material (55) to generally conform to the shape of the mold.

14. Method according to claim 13, wherein step (d) is performed before step (c).

15. Method according to claim 13 or 14, wherein around the external circumference of said bore (13) and sprocket mounting arrangements (19) and pedal mounting arrangement (14) foam (66) is provided enhancing the adherence with the composite material.

16. Method according to any of claims 13 to 15 wherein step (e) comprises heating the bottom half and the top half of the female mold.

17. Method according to any of claims 13 to 16, further comprising the step of:
g) cooling the top half and the bottom half of the female mold subsequent to inflating said bladder.

18. Device made of composite material comprising at least one metal connection pieces, wherein said device is made of one piece using a bladder molding technique whereby at least one bladder is inflated through passage protruding at least one of the connections pieces and/or the composite material.
